# EUROPEAN PATENT APPLICATION

(11) **EP 0 949 776 A2**
(43) Date of publication of application: **13.10.1999**
(21) Application number: 99302525.3
(22) Date of filing: 31.03.1999
(51) Int. Cl.: H04J 14/02

(54) **Optical transmitter, multiple wavelength optical transmitter and optical transmission method**

(30) Priority: 31.03.1998 JP 8527798
(71) Applicant: NEC CORPORATION, Tokyo (JP)
(72) Inventor: Hara, Yasushi, Minato-ku, Tokyo (JP)
(74) Representative: Moir, Michael Christopher

(57) **Abstract**

An optical transmitter according to the present invention stops the output of a signal light and transmits a dummy light, upon an occurrence of abnormality of the signal light output. If an abnormality detection circuit placed in the optical transmitter detects either a change in the power of the signal light or a change in the wavelength at least, a monitoring circuit stops the output of the signal light, and transmits a continuous light, which has the same power and wavelength as those of a normal signal light, as a dummy light. The dummy light is output just after an abnormality of a signal light has been detected. Otherwise, the dummy light is always transmitted, and it is output from the optical transmitter by changing over an optical switch.

## Description

### BACKGROUND OF THE INVENTION

### Field of the Invention

The present invention relates to an optical transmitter and an optical transmission method. It specifically relates to an optical transmitter and an optical transmission method of transmitting light emitted from a reserved light source in place of an active light source.

### Description of the Related Art

The multiple wavelength optical transmission which allows an increase in transmission capacity per optical fiber has been serviceable for practical use. In the conventional multiple wavelength optical transmitter, an optical multiplexer multiplexes intrinsic wavelengths of optical lights transmitted from respective n optical transmitters into one, which outputs it. The light output is a multiple wavelength optical signal including n wavelengths of optical signals. Therefore, the multiple wavelength optical signal possesses a transmission capacity which is n times as large as that of one wavelength of optical signal. In other words, the transmission capacity per one optical fiber increases drastically.

However, there are problems that follow in the above multiple wavelength optical transmission. First, signal lights to be wavelength-multiplexed have very close wavelengths to one another. Thereby, if a problem occurs on the optical transmitter so that the wavelength of a signal light to be transmitted changes, an interference to the adjacent wavelengths of signal lights occurs. This interference causes quality degradation of the communication. Moreover, if the output of a specific optical transmitter stops or its level goes down, the level of the signal light passing through another signal line changes so that the quality of the communication degrades. This emanates from the fact that the optical amplifier placed on the multiple wavelength optical transmission channel controls the total level of signal lights so it is kept constant. In other words, when the level of a signal light goes down, the optical amplifier maintains the total level of signal lights as constant by raising the levels of other signal lights. As a result, the levels of the other signal lights change in the reception unit which receives a multiple wavelength signal light. This causes quality degradation of the communication.

### SUMMARY OF THE INVENTION

The objective of the present invention is to provide an optical transmitter, a multiple wavelength optical transmitter, and an optical transmission method, where other communication lines are not greatly influenced even though an abnormality occurs in the optical transmitter which makes up a multiple wavelength optical transmitter so that the wavelength and/or level of a signal light output changes.

An optical transmitter according to one aspect of the present invention comprises: a first light source; an optical modulator which modulates the output light of the first source; a second light source; means for supplying output light from the second light source to the modulator instead of the output light from the first light source upon the occurrence of an abnormal change in the output light of the first light source.

In another aspect, an optical transmitter of the invention comprises: a first light source; an optical modulator which modulates the output light of the first light source; a second light source; a monitoring circuit which monitors either the first light source or the output light at least; and a control circuit which stops the first light source from outputting and allows the second light source to output an output light upon reception of a given signal from the monitoring circuit. Another optical transmitter according to an aspect of the present invention comprises: a first light source; an optical modulator which modulates the output light of the first light source; a second light source; an optical switch which selects and outputs either the output light of the first light source or the output light of the second light source; a monitoring circuit which monitors either the first light source or the output light at least; and a control circuit which changes over the optical switch upon reception of a given signal from the monitoring circuit. In that other optical transmitter, a system can be used where the second light source always outputs a light. Also, another system can be used where a light is output upon reception of a signal transmitted from the control signal. In the above optical transmitter, the output light of the second light source is a dummy light on which no signal is superimposed. The wavelength and level are the same as those of a normal output light of the first optical light source.

A multiple wavelength optical transmitter according to the present invention comprises: a plurality of optical transmitters, each being described above; and an optical multiplexer which multiplexes the output lights which have been output from the plurality of optical transmitters. According to an optical transmission method of the present invention, either the wavelength or the level of the output light of the optical transmitter at least is monitored. And when either one of them falls within the range of abnormal values, a dummy light is output from a reserved light source, in place of the output light.

According to the above present invention, when the output light from an optical transmitter changes, a dummy light is quickly transmitted from the optical transmitter. Therefore, in the multiple wavelength optical transmission, the communication qualities of the other lines do not degrade.

### BRIEF DESCRIPTION OF DRAWINGS

The above and other objects, features and advantages of the present invention will become apparent from the following detailed description when taken in conjunction with the accompanying drawings, wherein:
FIG. 1 is a block diagram of the conventional multiple wavelength optical transmitter;
FIG. 2 is a block diagram of a multiple wavelength optical transmitter according to the present invention;
FIG. 3 is a block diagram of a transmission circuit;
FIG. 4 is a block diagram of another multiple wavelength optical transmitter according to the present invention.

### DETAILED DESCRIPTION OF THE PREFERRED EMBODIMENTS

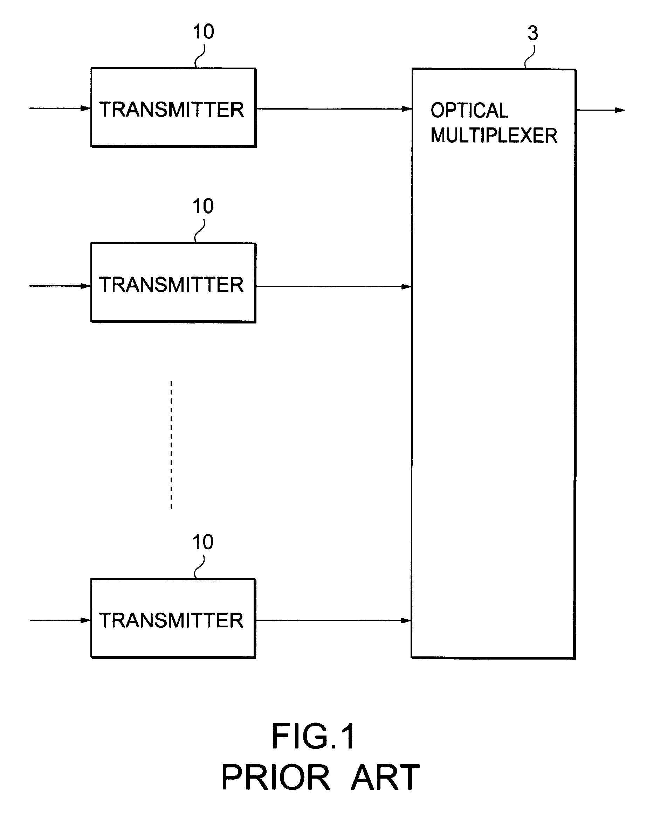

As shown in FIG. 1, in the conventional multiple wavelength optical transmitter, n optical transmitters 10 transmit respective intrinsic wavelengths λ1 to λn of optical signals. The output ports of the optical transmitter 10 are connected to n input ports of an optical multiplexer 3, respectively. The optical coupler 3 multiplexes n optical lights which have entered the n input ports, into one, outputting it through its own output port. The light signals entering the input ports of the optical multiplexer 3 have respective intrinsic wavelengths, so that the optical signal which is output to the output port is a multiple wavelength optical signal including the wavelengths λ1 to λn of the optical signals distributed along the wavelength axis. Therefore, the transmission capacity is n times as large so the transmission capacity per optical fiber increases drastically.

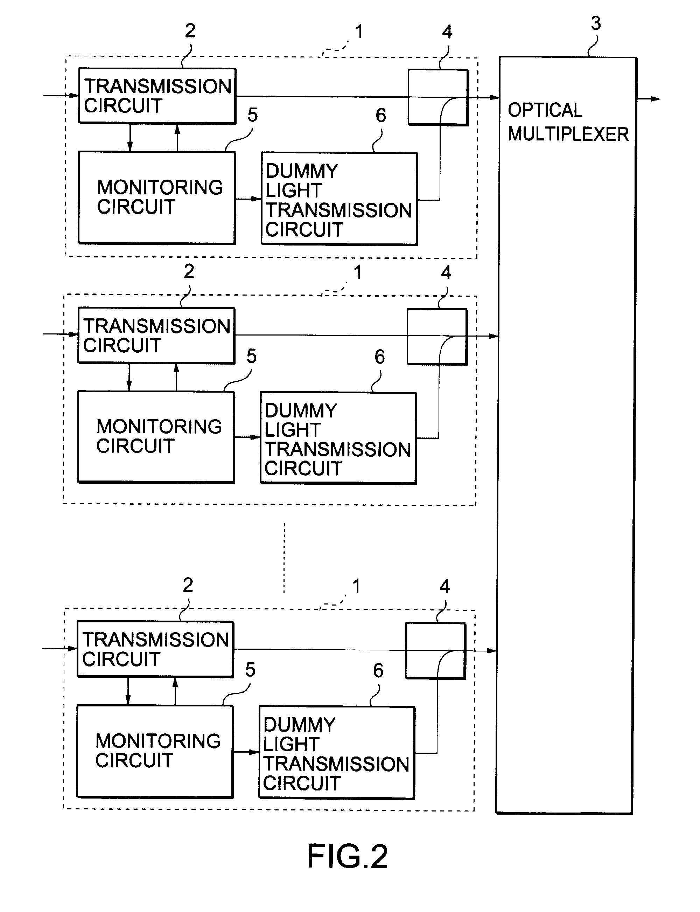

With reference to FIG. 2, the multiple wavelength optical transmitter according to the present invention comprises an optical multiplexer 3 and n optical transmitters 1. The output ports of the optical transmitters 1 are connected to n input ports of the optical multiplexer 3. The optical transmitter 1 comprises a transmission circuit 2, a monitoring circuit 5, a dummy light transmission circuit 6, and an optical coupler 4. The output light of the transmission circuit 2 enters an input port of the optical coupler 4. The transmission circuit 2 is also connected to the monitoring circuit 5, and the monitoring circuit 5 is connected to a dummy light transmission circuit 6. The output port of the dummy light transmission circuit 6 is connected to the other input port of the above optical coupler 4. The other optical transmitters 1 also have the same structure.

The operation of the optical transmitter will be explained below. The n optical transmitters 1 transmit respective intrinsic wavelengths of optical signals. Under normal conditions, the monitoring circuit 5 outputs a control signal which allows the transmission circuit 2 to output an optical signal, whereas outputting a control signal which allows the dummy light transmission circuit 6 to stop outputting a light. Thereby, the output port of the optical coupler 4 outputs the optical signal which is output from the transmission circuit 2. The transmission circuit 2 has a circuit which detects an abnormality of the transmission signal. If the abnormality detection circuit detects an abnormality of either a laser diode or the light output at least, it outputs a signal for use in informing the monitoring circuit 5 of the abnormality. The abnormality that the abnormality detection circuit detects includes, for example, a change in the wavelength of the transmission light and the output of the transmission signal. A method of detecting a change in the wavelength of a transmission light includes a method of monitoring the temperature of a laser diode and a method of monitoring the power of an optical signal specifically passing through an optical band pass filter, etc. An abnormality that the above abnormality detection circuit further detects includes degradation of a laser diode and a circuit failure. When the monitoring circuit 5 receives an abnormal signal from the above-mentioned abnormality detection circuit, it transmits a control signal to the transmission circuit 2 allowing the transmission circuit 2 to stop outputting an optical signal. At the same time, the monitoring circuit 5 sends a control signal to the dummy light transmission circuit 6, allowing the dummy light transmission circuit 6 to output a continuous light which has the same wavelength and level as that output from the above transmission circuit 2. The light output from the dummy light transmission circuit 6 is transmitted via the optical coupler 4 to the optical multiplexer 3. The n output ports of the optical couplers 4 are connected to the respective n input ports of the optical multiplexer 3. The optical multiplexer 3 multiplexes the signal lights input from the n input ports into one, outputting it via the output port. The Arrayed Waveguide Grating and other related materials as well as a fusion-type optical coupler are used for the optical multiplexer 3.

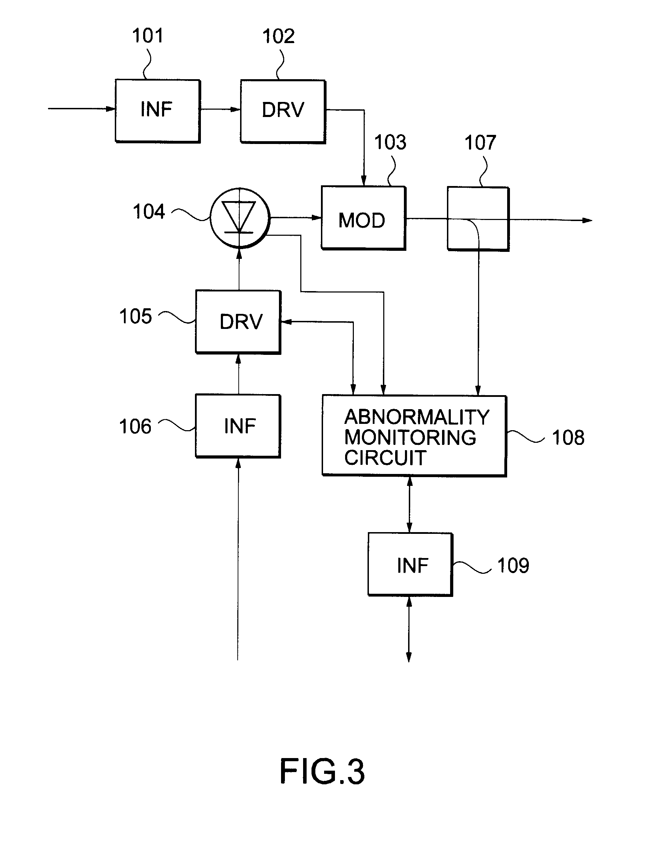

With reference to FIG. 3, the transmission circuit 2 comprises: a laser diode 104, which outputs a continuous light; an optical modulator (MOD ) 103, which modulates the continuous light by a primary signal; and an abnormality monitoring circuit 108. The primary signal, which has been input as an electric signal, enters a modulator drive circuit (DRV ) 102 via an interface circuit (INF ) 101, and thereby it is then amplified to an electric power enough to drive the optical modulator (MOD ) 103. The optical modulator (MOD ) 103 modulates the continuous light output from the laser diode 104 by the primary signal. The abnormality monitoring circuit 108 monitors the output power and bias current of the laser diode 104 via the laser drive circuit (DRV ) 105, and also monitors the output power and transmitted wavelength of the modulated optical signal which has been branched by an optical branching filter 107. To detect a change in the wavelength of the branched light, a change in the power of a signal light, which has penetrated a band pass filter (not shown in drawings ) placed between the optical branching filter 107 and the abnormality monitoring circuit 108, is detected. The power of the light which is branched can be detected by a photo detector. Upon reception of a control signal from the monitoring circuit 5, the abnormality monitoring circuit 108 stops the flow of the bias current for the laser diode 104 so that the output of a light is stopped.

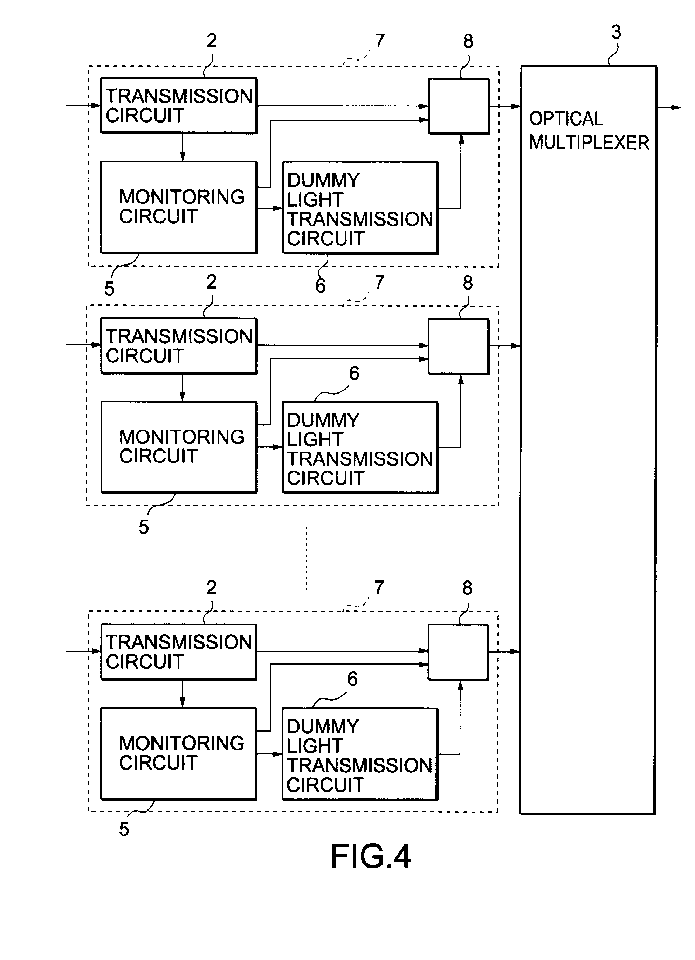

As shown in FIG. 4, another optical transmitter 7 comprises a transmission circuit 2, a monitoring circuit 5, a dummy light transmission circuit 6, and an optical switch 8. The output light of the transmission circuit 2 enters one of the input ports of the optical switches. The transmission circuit 2, is also connected to the monitoring circuit 5, and the monitoring circuit 5 is connected to the optical switch 8 and the dummy light transmission circuit 6. In the case where the monitoring circuit 5 does not control the dummy light transmission circuit 6, that is to say, where a dummy light is always output, the monitoring circuit 5 does not need to be connected to the circuit 6. The dummy light output from the dummy light transmission circuit 6 enters the other input port of the above optical switch.

The operation of the optical transmitters 7 will be explained. The n optical transmitters 7 transmit the respective intrinsic wavelengths of optical signals. In normal conditions, the monitoring circuit 5 outputs a control signal, which allows the transmission circuit 2 to output an optical signal. It also controls the optical switch 8 in such a manner that the optical switch 8 outputs the output light sent from the above transmission circuit 2. The dummy optical transmission circuit 6 always outputs a continuous light which has the same wavelength and level as those of the output light of the transmission circuit 2, to the optical switch 8. Upon reception of a signal sent from the monitoring circuit 5, the dummy optical transmission circuit 6 can also output a dummy light.

The transmission circuit 2 in the optical transmitter 7 also has an abnormality detection circuit. If it detects an abnormality of either the laser diode or the output light at least, an abnormality signal is output to the monitoring circuit 5. The subjects that the abnormality detection circuit is to detect have been described above. Upon reception of the abnormality signal from the above abnormality detection circuit, the monitoring circuit 5 transmits a control signal to the optical switch 8, changing over the optical switch 8 so that the output of the signal light sent from the transmission circuit 2 is stopped, and a dummy light sent from the dummy light transmission circuit 6 is output, alternatively. The optical switch outputs the dummy light to the optical multilexer 3.

The placement of the abnormality detection circuit in the dummy light transmission circuit 6 enables monitoring of the dummy light output at all times.

It is noted that in the above configuration, the optical multiplexer 3 wavelength-multiplexes the signal lights transmitted from the optical transmitters 1 to 7 into one, transmitting it as a multiple wavelength signal light. The wavelengths of the signal light fall within a 1.55 microns band, whereas the intervals of the wavelengths fall within approximately 0.8 microns to 1.0 micron, normally. Definition of abnormal changes in wavelengths and levels is preferably made in the system design phase while taking the other conditions into consideration.

As described above, according to the present invention, if an abnormality occurs in the optical transmitter, a continuous dummy light, which has the same wavelength and level as those of the signal light, is sent in place of the signal light. This inhibits an occurrence of a possible interference among the signal lights and possible changes in the levels of other signal lights. Therefore, even if an abnormality occurs in a specific line, the communication qualities of the other lines cannot be badly influenced.

While the present invention has been described in connection with certain preferred embodiments, it is to be understood that the subject matter encompassed by the present invention is not limited to those specified embodiments. On the contrary, it is intended to include all alternatives, modifications, and equivalents as can be included within the spirit and scope of the following claims.

Each feature disclosed in this specification (which term includes the claims) and/or shown in the drawings may be incorporated in the invention independently of other disclosed and/or illustrated features.

Statements in this specification of the "objects of the invention" relate to preferred embodiments of the invention, but not necessarily to all embodiments of the invention falling within the claims.

The description of the invention with reference to the drawings is by way of example only.

The text of the abstract filed herewith is repeated here as part of the specification.

An optical transmitter according to the present invention stops the output of a signal light and transmits a dummy light, upon an occurrence of abnormality of the signal light output. If an abnormality detection circuit placed in the optical transmitter detects either a change in the power of the signal light or a change in the wavelength at least, a monitoring circuit stops the output of the signal light, and transmits a continuous light, which has the same power and wavelength as those of a normal signal light, as a dummy light. The dummy light is output just after an abnormality of a signal light has been detected. Otherwise, the dummy light is always transmitted, and it is output from the optical transmitter by changing over an optical switch.

## Claims

1. An optical transmitter, comprising:
a first light source;
an optical modulator which modulates the output light of the first light source;
a second light source;
a monitoring circuit which monitors the first light source and/or the output light thereof; and
a control circuit which stops the first light source from outputting, and allows the second light source to output an output light upon reception of a given signal from the monitoring circuit.

2. An optical transmitter comprising:
a first light source;
an optical modulator which modulates the output light of the first source;
a second light source;
means for supplying output light from the second light source to the modulator instead of the output light from the first light source upon the occurrence of an abnormal change in the output light of the first light source.

3. The optical transmitter, according to claim 1 or claim 2, further comprising an optical coupler which couples the output light of the first light source and the output light of the second light source.

4. An optical transmitter, comprising:
a first light source;
an optical modulator which modulates the output light of the first light source;
a second light source;
an optical switch which selects and outputs either the output light of the first light source or the output light of the second light source;
a monitoring circuit which monitors the first light source and/or the output light thereof; and
a control circuit which changes over the optical switch, upon reception of a given signal from the monitoring circuit.

5. The optical transmitter, according to any preceding claim, wherein the wavelength and level of the output light of the second light source are equal to the wavelength and level of the normal output light of the first light source.

6. The optical transmitter, according to claim 5, wherein the second light source always outputs an output light.

7. The optical transmitter, according to claim 4, wherein the second light source outputs an output light, dependent upon a signal sent from the control circuit.

8. The optical transmitter, according to claim 1, 2 or 4, wherein the output light of the second light source is a dummy light, on which signals are not superimposed.

9. A multiple wavelength optical transmitter, comprising:
a plurality of optical transmitters according to any preceding claim.

10. An optical transmission method, comprising the steps of:
monitoring the level and/or the wavelength of the output light of an optical transmitter; and
outputting a light from a reserve light source in place of the output light when either the level or the wavelength of the output light, or both falls within a range of given abnormal values.

11. The optical transmission method, according to claim 12, wherein the wavelength and level of the light output from the reserved light source are equal to the wavelength and level of a normal output light of the optical transmitter.

12. The optical transmission method, according to claim 12, wherein the light output from the reserved light source is a dummy light, on which no signals are superimposed.

13. The optical transmission method, according to claim 12, wherein the output lights, which have been transmitted from the plurality of optical transmitters, are wavelength-multiplexed and transmitted.
